(19) Europäisches Patentamt
European Patent Office
Office européen des brevets

(11) Publication number: **0 486 100 A1**

(12) **EUROPEAN PATENT APPLICATION**

(21) Application number: **91202922.0**

(22) Date of filing: **09.11.91**

(51) Int. Cl.[5]: **C07F 9/10**, C07F 9/6574, A61K 31/66

(30) Priority: **15.11.90 IT 2206990**

(43) Date of publication of application: **20.05.92 Bulletin 92/21**

(84) Designated Contracting States: **BE DE ES FR GB IT NL**

(71) Applicant: **MAGIS FARMACEUTICI S.p.A.**
**Via Cacciamali 34/36/38**
**I-25125 Brescia(IT)**

(72) Inventor: **Puricelli, Laura**
**Via Taramelli, 7**
**I-25100 Brescia(IT)**

(74) Representative: **Gervasi, Gemma et al**
**NOTARBARTOLO & GERVASI Srl Viale Bianca Maria 33**
**I-20122 Milan(IT)**

(54) **Process for preparing alpha-glycerophosphorylcholine.**

(57) α-glycerophosphorylcholine is obtained with high yield and purity by a process comprising the following steps:

a) reacting isopropylidene-glycerol in optically active or raceme form with 2-chloro-2-oxa-3,3,2-dioxophospholan at a temperature of between 0 and 10°C in an aprotic solvent;

b) reacting the obtained compound with trimethylamine in an aprotic solvent at ambient temperature to obtain α-isopropylidene 3-glycerylphosphorylcholine;

c) hydrolyzing the compound obtained in the preceding step in acid aqueous solution, purifying the α-glycerophosphorylcholine by elution through a column and crystallizing it.

EP 0 486 100 A1

Description of the invention

This invention relates to a process for preparing α-glycerophosphorylcholine with high yield and purity.

State of the art

α-glycerophosphorylcholine of formula (I)

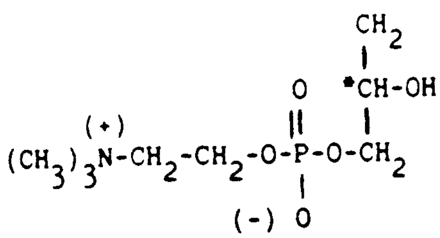

(I)

can exist in raceme or optically active dextrorotatory or levorotatory form because of the presence of the asymmetric carbon atom, marked with an asterisk.

In nature the compound of formula (I) exists in levorotatory form in phospholipids as phosphatidylcholine in mixture with phosphatidylethanolamine and phosphatidylinositol, and other derivatives.

All these derivatives are used in therapy as adjuvants in dyslipemia, and in the prevention and therapy of atherosclerosis.

In EP 217765 the glycerophosphorylcholine of formula (I) is obtained from soya or egg lecithin.

A methylene chloride/methanol mixture in a 2:1 volume ratio is used to extract from these crude lecithins a mixture of phospholipids which also contains phosphatidylcholine.

The extracted phosphatides are deacylated with sodium methylate in methanol, to obtain a mixture of L-α-glycerophosphoryl derivatives also containing L-α-glycerophosphorylcholine, which is separated on cationic resin (IRC-50).

The glycerophosphorylcholine preparation method described in this patent is laborious and involves various steps and considerable solvent volumes. In addition, purification over resins (IRC-50) does not result in a pharmaceutically pure product. In fact, the product obtained contains a considerable quantity of L-α-glycerophosphorylethanolamine plus other impurities normally present in crude lecithins.

The literature also describes other glycerophosphorylcholine synthesis methods, which are however only of theoretical interest as they result in low yields and are therefore difficult to implement industrially.

The present applicant has unexpectedly found that L-α-glycerophosphorylcholine can be obtained with high yield and purity. Specifically, the process of the present invention comprises the following steps:

a) reacting isopropylidene-glycerol of formula (III):

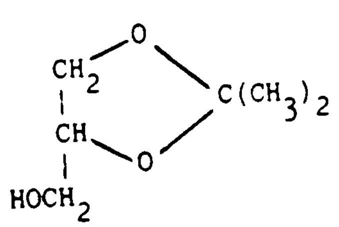

(III)

at a temperature of between 0 and 10 °C in an aprotic solvent with 2-chloro-2-oxa-3,3,2-dioxophospholan of formula (II)

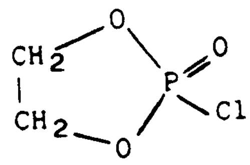

(II)

to obtain isopropylidene 3-glyceryl-ethylenecyclic phosphate of formula (IV):

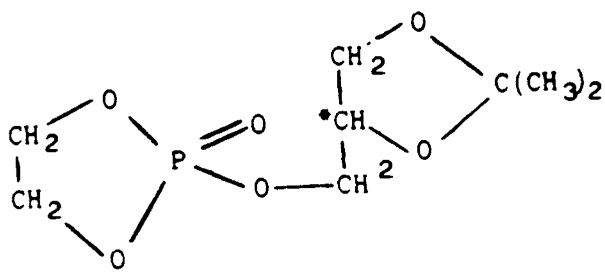

(IV)

b) Reacting the obtained compound with trimethylamine in an aprotic solvent at ambient temperature to obtain α-isopropylidene 3-glycerophosphorylcholine of formula (V):

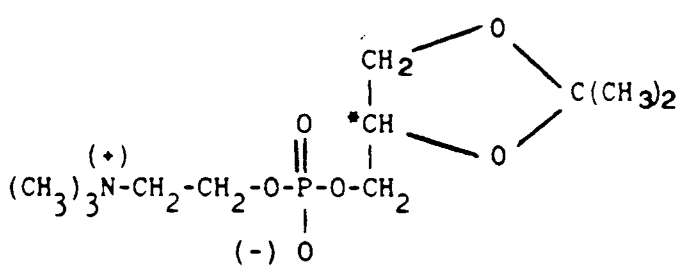

(V)

c) Hydrolyzing the compound obtained in the preceding step in an acid aqueous solution, purifying the α-glycerophosphorylcholine by elution through a column, and crystallizing it.

The reaction temperature of step a) of the process according to the present invention is preferably initially 0 ° C and is subsequently raised to 10 ° C.

Said reaction is preferably conducted in the presence of hydrochloric acid acceptors such as tertiary amines, triethylamine preferably being used.

The preferred aprotic solvent for the reaction involving the formation of the intermediate of formula (IV) is ethyl ether.

The intermediate of formula (IV) is separated from the reaction mixture with excellent yields by evaporating the solvent after tertiary base salts have been eliminated.

The reaction involving the formation of the intermediate (V), step b) of the process according to the present invention, is preferably conducted in methylene chloride. In step c) after evaporating the solvent the compound of formula (V) is hydrolyzed preferably with an aqueous 0.1 N hydrochloric acid solution, the acid α-glycerophosphorylcholine solution then being preferably purified through a cationic resin of IRC-50 type. The α-glycerophosphorylcholine is crystallized preferably from ethanol.

With the process of the present invention the compound is obtained in optically active levorotatory, dextrorotatory or raceme form starting respectively from D, L or raceme isopropylideneglycerol of formula (III).

The overall yield of the process according to the invention is very satisfactory, the individual yields of each step being between 50 and 95%.

The following examples are given as non-limiting illustration of the present invention.

EXAMPLE 1

Isopropylidene 3-glyceryl-ethylenecyclic phosphate (IV)

A solution of D-isopropylidene-glycerol (1.425 g) in 450 ml of diethylether at 0°C is added over a period of 5 minutes to a 10 ml solution of 2-oxa-2-chloro-3,3,2-dioxophospholan (1.56 g) and triethylamine (1.67 ml) in diethylether.

After 18 hours the mixture at 10°C is filtered to remove the triethylamine salt, and the filtrate is evaporated under vacuum to obtain 2.3 g of the intermediate of formula (IV), with a reaction yield of about 97%.

EXAMPLE 2

L-α-isopropylidene 3-glycerylphosphorylcholine (V)

A solution of 10.12 g of trimethylamine in 300 ml of dichloromethane is added over a period of 3 minutes under stirring to a solution of 150 ml of dichloromethane containing 2.382 g of isopropylidene 3-glyceryl-ethylenecyclic phosphate (IV).

After 5 hours at 25°C the solution is examined by TLC (hexane/ether 1:3) to check if synthesis is complete. The solution is evaporated to dryness under vacuum. 2.8 g of product are obtained. Elemental analysis confirms the compound structure.

EXAMPLE 3

L-α-glycerophosphorylcholine (I)

2.8 g of the product (V) are dissolved in 50 ml of 0.1 N hydrochloric acid solution. The solution is left for 3 hours at ambient temperature after which TLC is used to check if hydrolysis of the product is complete.

On termination of the reaction the acid solution is passed through a column of IRC-50 type (50 cm high and 1 cm diameter).

It is eluted with 50 ml of water until the hydrochloric acid is eliminated.

Elution is continued with about 100 ml of water until complete elution of the compound L-α-glycerophosphorylcholine (I) is achieved.

It is evaporated under vacuum to a small volume of about 15 ml. 100 ml of absolute ethyl alcohol are added under energetic stirring. About 1.5 g of L-α-glycerophosphorylcholine (I) are obtained of 99% purity.

## Claims

**1.** A process for preparing α-glycerophosphorylcholine, comprising the following steps:

a) reacting isopropylidene-glycerol of formula (III):

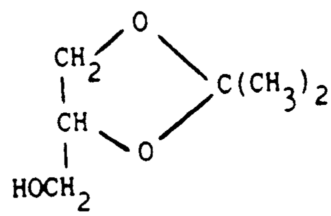

(III)

at a temperature of between 0 and 10°C in an aprotic solvent with 2-chloro-2-oxa-3,3,2-dioxophospholan of formula (II):

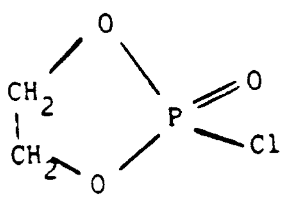

(II)

to obtain isopropylidene 3-glyceryl-ethylenecyclic phosphate of formula (IV):

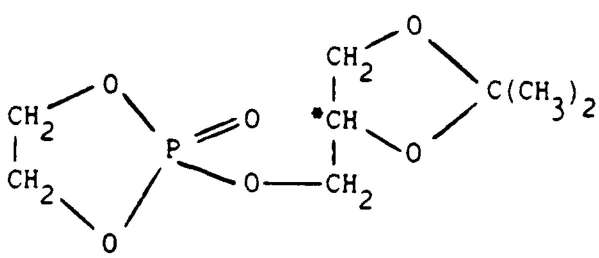

(IV)

b) reacting the obtained compound with trimethylamine in an aprotic solvent at ambient temperature to obtain α-isopropylidene 3-glycerophosphorylcholine of formula (V):

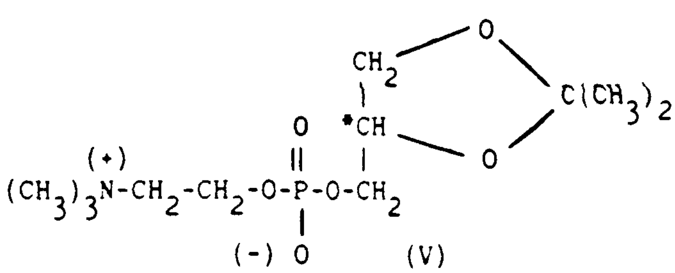

(V)

c) hydrolyzing the compound obtained in the preceding step in an acid aqueous solution, purifying the α-glycerophosphorylcholine by elution through a column, and crystallizing it.

2. The process for preparing α-glycerophosphorylcholine claimed in claim 1, wherein the reaction temperature of step a) of the process according to the present invention is initially 0°C and is subsequently raised to 10°C.

3. The process for preparing α-glycerophosphorylcholine claimed in one of the preceding claims, wherein the reaction of step a) is conducted in ethyl ether in the presence of acid acceptors.

4. The process for preparing α-glycerophosphorylcholine claimed claim 3, wherein the acid acceptor is a tertiary amine.

5. The process claimed in claim 4, wherein the tertiary amine is triethylamine.

6. The process claimed in one of the preceding claims, wherein the reaction involving the formation of the intermediate (IV) in step b) is conducted in the presence of methylene chloride as solvent.

7. The process for preparing α-glycerophosphorylcholine claimed in one of the preceding claims, wherein hydrolysis of the compound of formula (V) in step c) is conducted with an aqueous 0.1 N hydrochloric acid solution.

8. The process for preparing α-glycerophosphorylcholine claimed in one of the preceding claims, wherein the α-glycerophosphorylcholine is crystallized from ethanol.

9. The process claimed in claim 1 for preparing α-glycerophosphorylcholinein optically levorotatory form, characterised by using D-isopropylidene-glycerol of formula (III) as reagent in step a).

10. The process claimed in claim 1 for preparing α-glycerophosphorylcholinein optically dextrorotatory form, characterised by using L-isopropylidene-glycerol of formula (III) as reagent in step a).

11. The process claimed in claim 1 for preparing α-glycerophosphorylcholinein raceme form, characterised by using raceme isopropylidene-glycerol of formula (III) as reagent in step a).

European Patent Office

# EUROPEAN SEARCH REPORT

Application Number

EP 91 20 2922

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | ZHURNAL OBSHCHEI KHIMII, vol. 46, no. 4, April 1976, pages 912-916; E.E. NIFANT'EV et al.: "Synthesis of lipids and their models from glycerol ethylene phosphates I. 1,2-O-isopropylideneglycerol ethylene phosphite. New Approach to the synthesis of lecithins" * Whole document * | 1,2,4,5,10,11 | C 07 F 9/10<br>C 07 F 9/6574<br>A 61 K 31/66 |
| Y | US-A-4 710 580 (McGREGOR) * Whole document * | 1,2,4,5,10,11 | |
| Y | THE JOURNAL OF ORGANIC CHEMISTRY, vol. 24, no. 5, 1st June 1959, pages 630-635, American Chemical Society; R.L. McCONNELL et al.: "Phosphorus-containing derivatives of 2,2-dimethyl-1,3-propanediol" * Page 633, preparation of IIa,IIb,IIc * | 1,2,4,5,10,11 | |
| A | PATENT ABSTRACTS OF JAPAN, vol. 12, no. 237 (C-509)[3084], 6th July 1984; & JP-A-63 30 491 (SANKYO CO., LTD) 09-02-1988 * Whole abstract * | 1 | TECHNICAL FIELDS SEARCHED (Int. Cl.5)<br>C 07 F 9<br>A 61 K 31 |

The present search report has been drawn up for all claims

| Place of search | Date of completion of the search | Examiner |
|---|---|---|
| THE HAGUE | 13-01-1992 | OUSSET J-B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)